(19) Europäisches Patentamt
European Patent Office
Office européen des brevets

(11) **EP 1 814 276 A1**

(12) **EUROPEAN PATENT APPLICATION**

(43) Date of publication:
**01.08.2007 Bulletin 2007/31**

(51) Int Cl.:
**H04L 27/26** (2006.01)

(21) Application number: **06425037.6**

(22) Date of filing: **26.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Siemens S.p.A.**
**20126 Milano (IT)**

(72) Inventors:
• **Alletto, Gerlando**
**Agrigento (IT)**

• **Di Donna, Giambattista**
**20064 Gorgonzola (MI) (IT)**
• **Pasquin, Stefano**
**20060 Gessate (IT)**

(74) Representative: **Giustini, Delio**
**Siemens Mobile Communications S.p.A.**
**Postfach 22 16 34**
**80506 München (DE)**

(54) **Method for phase noise compensation in ofdm receiver, and corresponding device and receiver thereof**

(57) Compensation of phase noise is performed downstream a Discrete Fourier Transformer (1) converting received signals (r(n)) in the time domain into signals (x(k)) in the frequency domain. The invention is based on a linear transversal equaliser (4) working on the signals in the frequency domain for reducing both the common phase error and the intercarrier interference caused by the phase noise as loss of orthogonality of the OFDM signal.

FIG 1

**Description**

Field of the Invention

The present invention refers to wireless communication systems utilising OFDM/OFDMA (Orthogonal Frequency Division Multiplexing/orthogonal Frequency Division Multiple Access) techniques, and more particularly it concerns a method of and device for mitigating oscillator phase noise effects in OFDM/OFDMA receivers.

Background of the Invention

Orthogonal Frequency Division Multiplexing is a transmission technique proposed in recent years for different applications, such as Digital Video Broadcasting and high bit rate Wireless Local Area Networks. According to this technique, an information symbol modulates a set of frequencies and is detected at a receiver by means of a Discrete Fourier Transform (DFT).

Thanks to such a kind of modulation, OFDM is scarcely sensitive to selective fading, which will affect at most some the frequencies in the set and not a whole message. Conversely, OFDM is very sensitive to frequency offset and phase noise. The present invention is concerned with phase noise effect mitigation.

Several techniques have been proposed to this aim. A first group tries to contrast the phase noise directly at its source, that is the oscillators; others exploit the particular modulation adopted, by introducing an ad hoc signal processing on the received modulated signal. The latter category gives in general better results, especially from the point of view of reliability, and the invention belongs to such a category. These techniques take into account that there are two influences of phase noise upon an OFDM signal: one is a phase error common to all sub-carriers (Common Phase Error or CPE), which are equally rotated by the same angle, different at each OFDM symbol; the other is an inter-carrier interference (ICI). Methods and apparatus aiming at minimising both influences are of major importance.

An example is disclosed in EP-B 0 933 903. The document discloses a receiver with compensation circuit acting before the DFT, hence in the time domain. The circuit calculates a product between the Ng corresponding samples in the guard interval at the beginning and the end of the OFDM symbol. That product generates an error signal whose angle $\phi_m$ is just the phase variation across the N samples of the m-th OFDM symbol. A linear interpolation gives the sample-by-sample phase evolution required to correct the ICI, and the result of the interpolation is used to generate a signal with a reduced degradation. The limits of this compensation method lie in the phase sampling interval (equal to OFDM symbol interval), which may be too slow for some phase noise process realisation, and in the linear interpolation performed, which assumes a constant sample-by-sample phase difference. No indication about the method performance in reducing phase noise is provided.

WO-A 03/047196 proposes a method in which a received OFDM symbol is split into a plurality of sequential segments in the time domain and a DFT is separately performed on each segment. The pilot sub-carriers allow estimating the phase of each segment; by subtracting the common contribute due to the channel, the phase noise angle is identified and then cancelled for each segment in the time domain. The whole OFDM symbol can be recomposed and submitted to a DFT for data decoding. The method reduces the phase estimate interval, yet it is rather complex. Again, no performance results are given.

US-A 2004/0171366 proposes a method of suppressing phase noise downstream the DFT in an OFDM-based WLAN conforming to IEEE Standard 802.11a. The method estimates the CPE from the pilot subcarriers and the ICI plus noise energy from the null sub-carriers. The estimated quantities are used to determine coefficients c(k) of an MMSE equaliser, consisting in a coefficient for each data sub-carrier and providing an estimate of THE received data. The simulation results show that the performance of a receiver employing the method is rather close to those for a situation of phase noise absence. Yet the method is computationally complex, since it requires the previous estimation of the CPE and ICI and uses an equaliser coefficient for each data subcarrier (48 according to IEEE Standard 802.11a). The complexity is still greater for use in WLANs according to more recent standards, such as IEEE 802.16-2004, where 192 data subcarriers are envisaged.

Summary of the invention

Thus, it is an object of the invention to provide a method and a device which provide an effective correction of the phase noise with a reduced complexity with respect to the prior art.

In a first aspect, the invention provides a method in which a received OFDM signal, after having undergone a Discrete Fourier Transform to be converted into frequency domain, is submitted to a linear transversal equalisation operating on all subcarriers of the orthogonal frequency multiplex and based on a number of coefficients far lower than a number of said subcarriers.

In a second aspect, the invention provides a device connected downstream a Fourier transformer converting time-domain samples of received OFDM signals into signals in the frequency domain. wherein said device comprises a linear transversal equaliser operating on all subcarriers of the orthogonal frequency division multiplex and having a number of taps far lower than a number of said subcarriers.

Preferably, the device comprises 3 to 7 taps.

The invention also concerns a receiver employing the compensation method and device of the invention.

In a preferred application, the receiver is a receiver for a wireless local area network according conforming IEEE Standard 802.

In summary, the core idea of this invention is the adoption of a Linear Transversal Equaliser (LTE) working in the frequency domain for reducing both the CPE and the ICI caused by the phase noise as loss of orthogonality of the OFDM signal.

The LTE is a well known equalising structure in the time domain, where it has been employed for counteracting the ISI (Inter Symbol Interference) among adjacent information symbols, generated by the transmission channel in a convolutional form.

The phase noise affects the received OFDM signal in the time domain in a multiplicative form. OFDM receivers include DFT (Discrete Fourier Transformer) to decode the information symbols, which thereafter are in the frequency domain, where the phase noise has become a convolutional disturb signal. That is why a LTE, working in the frequency domain, is powerful in reducing the ICI and the CPE as well.

Brief description of the drawings

Further characteristics and advantages of the present invention will become more apparent from the following detailed description of a preferred embodiment, in which:

- Fig. 1 is a block diagram of an OFDM receiver including a compensation device according to the invention;
- Fig. 2 is a diagram showing the performance of the compensation device according to the invention.

Detailed description of the invention

The invention will be described in detail assuming that the system in which it is applied is a system conforming to IEEE Standard 802.16. As known, according to that standard, each OFDM symbol is allotted N = 256 subcarriers, distributed over an assigned channel bandwidth (e.g. 3.5, 7, 14 ... MHz). In each channel, the first 28 subcarriers (numbered -128 to -101) and the last 27 subcarriers (numbered -101 to 127) are non-modulated subcarriers (usually referred to as null subcarriers) forming guard intervals in respect of the adjacent channels. Also subcarrier 0, corresponding to the d.c. component, is a non-modulated subcarrier. The remaining 200 subcarriers include 192 data subcarriers, which are modulated by QAM information symbols, and 8 pilot subcarriers, which are modulated by QPSK symbols that are defined by the standard, and being therefore known to the receiver, can be used at the receiver for estimation purposes. For the purposes of the invention, only the distinction between known signals (the signals conveyed by the null and pilot subcarriers) and unknown signals (the information symbols conveyed by the data subcarriers) is of interest: therefore, hereinafter, we will consider the whole of the sub-carriers as split into two subsets, denoted $I_P$ for the pilot and null sub-carriers and $I_D$ for the data sub-carriers.

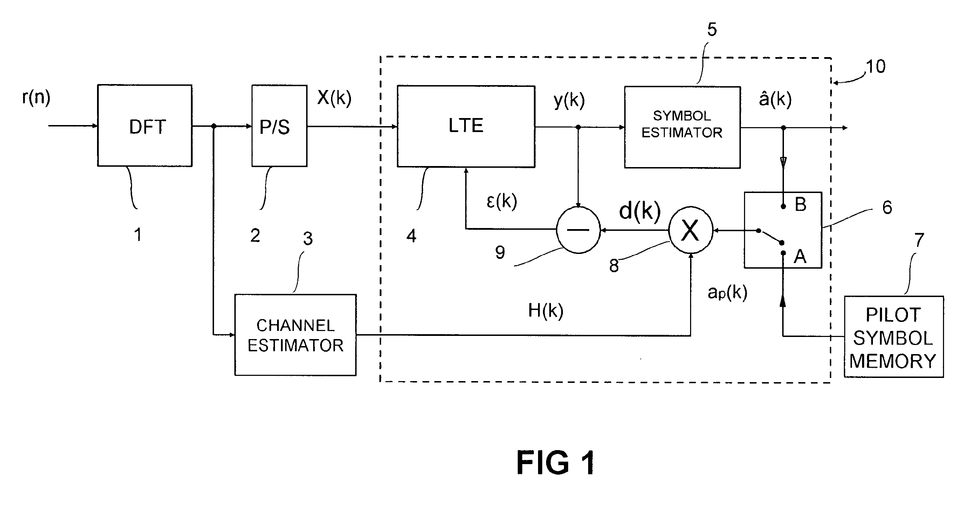

Referring to Fig. 1, samples r(n) of a received OFDM signal transmission are fed to a Discrete Fourier Transformer (DFT) 1 after downconversion to baseband and analogue-to-digital conversion in conventional conversion units, not shown in the drawing. Samples r(n), which are signals in the time domain, are affected, as stated in the introduction of the specification, by phase noise causing CPE and ICI. Signals r(n) can be expressed as

$$r(n) = s(n) \otimes h(n)e^{j\phi(n)} + \zeta(n) \qquad (1)$$

where s(n) are the transmitted signals, h(n) is the channel impulse response, $\otimes$ is the convolution symbol, $\phi(n)$ is the phase noise, and $\zeta(n)$ is the additive white Gaussian noise (AWGN).

Discrete Fourier Transformer (DFT) 1 transforms signals r(n) into signals x(k) in the frequency domain and feeds the frequency-domain samples to a parallel-to-serial converter (P/S) 2 and to a channel estimator 3. Signal x(k) outgoing from N-point DFT 2 and P/S 2 is expressed by:

$$x(k) = \sum_{l=0}^{N-1} \Phi(k - l)H(l)a(l) + \eta(k) \qquad (2)$$

where:

- a(l) are the transmitted QAM symbols, in general defined for $0 \le l \le N-1$, one QAM symbol for each sub-carrier;
- H(l) is the channel transfer function for sub-carrier index l;

- $\Phi(k) = \dfrac{1}{N} \sum_{n=0}^{N-1} e^{j\varphi(n)} e^{-j\frac{2\pi}{N}kn}$ is the DFT of the phase nose $\phi(n)$;

- $\eta(k)$ is the DFT of $\zeta(n)$.

Signal x(k) is fed to phase noise compensator 10. Compensator 10, which is the subject matter of the invention, essentially consists of a Linear Transversal Equaliser (LTE) 4 and of the means for computing and optimising the equaliser coefficients (tap values) c(i) at each OFDM symbol. As discussed in more detail below, the optimisation criterion is for instance the MMSE (Minimum Mean Square Error). The structure of a Linear Transverse Equaliser is well known and is widely disclosed in the literature. Reference can be made for instance to the book of S. Benedetto, E. Biglieri and V. Castellani "Digital Transmission Theory", Prentice-Hall, 1987.

The signal at the LTE output is denoted by y(k). Its expression

$$y(k) = \sum_{i=-M}^{M} c(i)x(k - i) \qquad (2)$$

with M << N (e.g. at least one order of magnitude smaller) identifies the equaliser simple structure.

In a preferred embodiment of the invention, M is in the range 1 to 3. M = 1 (3-tap equaliser) provides the minimum tap number necessary for compensating also ICI. A seven-tap equaliser (M = 3) provides excellent performance, as will be shown hereinafter, while having a structure greatly simpler than the equaliser with one tap per data subcarrier of US 2004/0171366.

The equaliser output y(k) is then fed to a symbol estimator 5 that provides estimation â(k) of each received OFDM symbol. Symbol estimators are well known in the art and need not to be disclosed in detail.

Two working phases of LTE 4 must be distinguished, as illustrated in Fig. 1 by the two positions of a switch 6.

In the first phase (switch 6 in position A), the pilot and null sub-carrier symbols $a_P(k)$, which are known at the receiver and are read from a pilot symbol memory 7 (in practice, a ROM), are used to achieve a roughly estimate of the tap values in LTE 4. In the second phase (switch 6 in position B), phase noise corrector 100 estimates the symbols transmitted on the data sub-carriers and uses the symbols on all subcarriers for determining the best values of the LTE taps. Thus, depending on the position of switch 6, a multiplier 8 receives either known symbols $a_P(k)$ or estimated OFDM symbols â(k) and multiplies them by a channel estimate H(k) supplied by channel estimator 3. Channel estimation in estimator 4 is performed by known methods, for instance, as disclosed in the papers "On channel estimation in OFDM systems " by J.J. Van de Beek et al., Proceedings IEEE, Vehicular Technology Conference, vol. 2, Chicago, July 1995, or "OFDM channel estimation by singular value decomposition " by O. Edfors et al., IEEE Transactions on Communications, pp. 931-939, July 1998.

Output signal d(k) of multiplier 8 is fed to an input of a subtractor 9, which has a second input connected to the output of LTE 5 and supplies LTE with error $\varepsilon(k)$. Error $\varepsilon(k)$ is thus expressed as

$$\epsilon(k) = \sum_{i=-M}^{M} c(i)x(k - i) - H(k)a(k) = y(k) - d(k) \qquad (4)$$

and is computed for $k \in I_P$ in the first phase and for $k \in I_P \cup I_D$ (i.e. $0 \le k \le N-1$) in the second phase.

As said, the optimisation criterion is the MMSE (Minimum Mean Square Error).

To perform the MMSE calculation, the following two (2M+1)-dimensional vectors (the vectors of the received data and of the equaliser coefficients, respectively) can be defined:

$$
\begin{aligned}
\mathbf{x}^T(k) &= [x(k + M)................x(k + 1)x(k)x(k - 1)...............x(k - M)] \\
\mathbf{c}^T &= [c(-M)...........................c(-1)c(0)c(1).......................c(M)]
\end{aligned}
\tag{5}
$$

By using (5), equation (4) can be compacted in the following:

$$
\varepsilon(k) = \mathbf{c}^T \mathbf{x}(k) - d(k)
\tag{6}
$$

and, by averaging the error, the following relation is obtained:

$$
E = \frac{1}{N_p} \sum_k |\varepsilon(k)|^2 = \mathbf{c}^H \mathbf{A} \mathbf{c} + d_p^2 - 2\Re(\mathbf{c}^H \mathbf{v})
\tag{7}
$$

where

- the summation index k runs in $I_P$ or in $I_P \cup I_D$ in the first or the second phase, respectively, Np being the number of the sub-carriers involved in either case;

- $d_0^2 = \dfrac{1}{N_p} \sum_k |d(k)|^2$ is the mean data power;

- **A** is the autocorrelation matrix of received signal x(k), i.e. a (2M+)×(2M+1) matrix with generic entry $A_{ij} = \dfrac{1}{N_p} \sum_k x^*(k - i)x(k - j)$;

- v is the cross-correlation vector of received signal x(k) and filtered data d(k), i.e. a (2M+1) vector with generic component $v_i = \dfrac{1}{N_p} \sum_k x^*(k - i)d(k)$;

- $\Re$ is the real part of the parenthetical expression.

The best tap vector $C_{opt}$ is then calculated by setting to zero the gradient of E with respect to c and is given by:

$$
\mathbf{c}_{opt} = \mathbf{A}^{-1}\mathbf{v}
\tag{8}
$$

The best tap vector can be calculated by a direct matrix inversion using a DSP (digital signal processor) implementing the receiver or can be obtained with a convergence technique well known for the ISI equaliser in the time domain:

$$
c^{(n+1)}(i) = c^{(n)}(i) - \alpha\varepsilon(k)x^*(k\text{-}i)
\tag{9}
$$

where n is the iteration index and runs in $I_P$ or in $I_P \cup I_D$ during the first or the second phase, respectively.

The second phase can be repeated if all coefficients have not reached their steady state values. However, simulation results have shown that convergence to the steady state values happens after only one or two repetitions.

The step size $\alpha$ is an empirical trade-off between the convergence speed and the steady state residual error in the tap values (with respect to those calculated by (7)).

It is to be noted that, in case of an LTE used in connection with OFDM signals, the equaliser coefficients are different at each OFDM symbol, so that the rough determination and the convergence to the steady state value are to be effected at each symbol. Thus, LTE 4 is to be implemented with a faster technology than required for the LTEs conventionally used for intersymbol interference compensation, where the coefficients are slowly variable in time and their convergence is a continuous process.

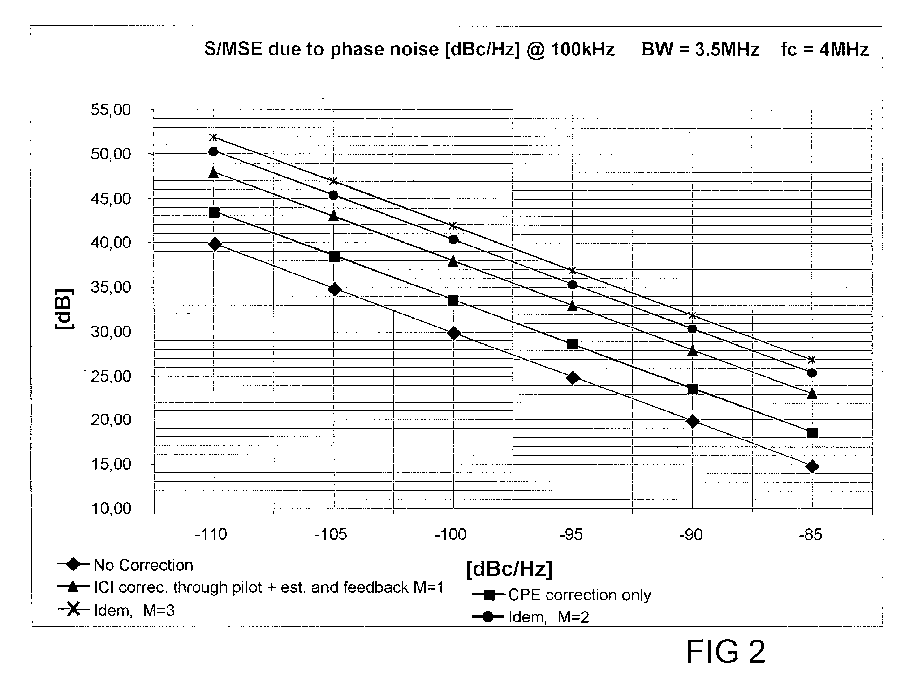

Fig. 2 shows the results of simulations carried out to evaluate the phase noise equaliser performance in case of its application in a 256-OFDM system compliant with IEEE Standard 802.16-2004 having a nominal channel bandwidth BW = 3.5 MHz and an over-sampling factor of 8/7. To evaluate the phase noise equaliser performance independently of other impairments which usually affect OFDM Systems, thermal noise has been considered absent and the channel transfer function H(k) has been ideally estimated at each sub-carrier frequency. The phase noise has been modelled as a discrete Wiener process with the phase given by the difference equation $\phi(n) = \phi(n-1) + x(n)$, where x(n) are zero mean Gaussian random variables. The variance $\sigma_x$ has been varied to obtain the $1/(1+f^2)$ spectrum profile to reach a desired dBc/Hz at a prefixed frequency offset $f_o$ from the carrier ($f_o$ = 100 KHz in fig.2).

In fig. 2, The Signal-to-Mean Square Error ratio (S/MSE) has been plotted versus the phase noise intensity for five different cases, namely:

- without phase noise equaliser;
- phase noise equaliser with only one complex tap (M = 0; only the CPE can be corrected);
- phase noise equaliser with 3 complex taps (M = 1);
- phase noise equaliser with 5 complex taps (M = 2);
- phase noise equaliser with 7 complex taps (M = 3)

The curves in fig. 2 has been obtained for a QPSK modulation on each carrier, but it has been verified that they do not change for more complex modulation formats up to the point where the MSE due to phase noise equals the S/N ratio for a BER=$10^{-3}$.

It is evident that an appreciable reduction of the MSE due to phase noise can be reached with very few equaliser taps; moreover this reduction is independent of the oscillator quality.

Note that, even if the description has been made with reference to the application of the invention to a WLAN conforming to IEEE Standard 802.16, the invention itself can be used in connection with any other system using OFDM (or OFDMA).

Changes and modifications to the constructional details of the disclosed invention are possible without departing form the scope of the invention, as defined in the appended claims.

**Claims**

1. A method of compensating phase noise in an OFDM - Orthogonal Frequency Division Multiplexing - data stream at a receiver of a wireless communication system, wherein time samples of each OFDM symbol of the received data stream is submitted to a Discrete Fourier Transform to obtain signals (x(k)) in the frequency domain, **characterised in that** said signals in the frequency domain (x(k)) are submitted to a linear transversal equalisation (4) performed at each OFDM symbol on all subcarriers in the orthogonal frequency division multiplex and based on a number of coefficients far lower than that of said subcarriers.

2. A method as claimed in claim 1, **characterised in that** said equalisation is based on 3 to 7 equaliser coefficients.

3. A method as claimed in claim 1 or 2, **characterised in that** said signal in the frequency domain (x(k)) is serialised before being submitted to equalisation.

4. A method as claimed in any preceding claim, wherein the equalisation performed for each OFDM symbol comprises a training phase having a first step for a rough determination of the equalisation coefficients, and a second step to make said coefficients converge to respective steady state values, **characterised in that** said first step is performed by using signals previously known to the receiver and associated with null and pilot subcarriers of the OFDM multiplex, and said second step is performed on all subcarriers, by using an estimation of OFDM symbols associated with data subcarriers.

5. A device (10) for compensating phase noise in an OFDM - Orthogonal Frequency Division Multiplexing - data stream at a receiver of a wireless communication system, wherein said device (10) is connected downstream a Fourier transformer (1) converting time-domain samples (r(n)) of received OFDM symbols into signals in the frequency domain (x(k)), **characterised in that** said device comprises a linear transversal equaliser (4) acting on all subcarriers of the orthogonal frequency division multiplex and having a number of taps far lower than a number of said subcarriers, the tap values being determined at each OFDM symbol

6. The device (10) as claimed in claim 5, **characterised in that** said equaliser (4) comprises 3 to 7 taps.

7. The device (10) as claimed in claim 5 or 6, **characterised in that** it further comprises a parallel-to-serial converter (2) connected to the output of the Fourier transformer (1) for serialising the signals in the frequency domain generated by said Fourier transformer and feeding said equaliser (4) with serialised signals in the frequency domain (x(k)).

8. The device (10) as claimed in any of claims 5 to 7, comprising means (8, 9) for determining the equaliser coefficients in a training phase performed at each symbol including a first step for a rough determination of the equalisation coefficients, and a second step for making said coefficients converge to respective steady state values, **characterised in that** the device further comprises switching means (6) arranged to supplying the adjusting means (8, 9) during said first step with signals stored in the receiver and associated with null and pilot subcarriers of the OFDM multiplex, and with estimated OFDM information signals in said second step.

9. A receiver for OFDM - Orthogonal Frequency Division Multiplexed - signals, wherein a phase noise compensation in the received signals is performed downstream a Fourier transform of said received signals, **characterised in that** said phase noise compensation is performed by a method according to any of claims 1 to 4.

10. A receiver for OFDM - Orthogonal Frequency Division Multiplexed - signals, comprising:

converting means for frequency down-converting and digitising received OFDM signals;
a Fourier transformer (2) for converting digitised OFDM signals into signals into symbols in the frequency domain;
compensating means (10) connected downstream said Fourier transformer for compensating phase noise in said frequency domain symbols; and
a symbol estimator (6) connected downstream said compensating means (10) for estimating OFDM symbols;

**characterised in that** said compensating means include a device as claimed in any of claims 5 to 8.

11. The receiver as claimed in claims 9 or 10, **characterised in that** it is a receiver for a system operating according to IEEE 802 standard.

FIG 1

EP 1 814 276 A1

S/MSE due to phase noise [dBc/Hz] @ 100kHz    BW = 3.5MHz    fc = 4MHz

FIG 2

European Patent Office

**EUROPEAN SEARCH REPORT**

Application Number

EP 06 42 5037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 233 276 B1 (SIMEON RICHARD) 15 May 2001 (2001-05-15) * column 3, line 2 - line 5 * * column 5, line 59 - column 6, line 23 * * figure 2b * | 1-11 | INV. H04L27/26 |
| A | SEBALD G ET AL: "ADVANCED TIME- AND FREQUENCY-DOMAIN ADAPTIVE EQUALIZATION IN MULTILEVEL QAM DIGITAL RADIO SYSTEMS" IEEE JOURNAL ON SELECTED AREAS IN COMMUNICATIONS, IEEE SERVICE CENTER, PISCATAWAY, NJ, US, vol. SAC-5, no. 3, April 1987 (1987-04), pages 448-456, XP000759095 ISSN: 0733-8716 * page 453, right-hand column, paragraph 3 - page 454, right-hand column * | 1-11 | |
| D,A | US 2004/171366 A1 (BAR-NESS YEHESKEL ET AL) 2 September 2004 (2004-09-02) * figure 1 * | 1-11 | |
| A | DUMAIS P ET AL: "Multi-equalization a powerful adaptive filtering for time varying wireless channels" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 1744-1747, XP010786935 ISBN: 0-7803-8521-7 * page 1745, left-hand column, line 4 - line 16 * | 1-11 | TECHNICAL FIELDS SEARCHED (IPC) H04L |

The present search report has been drawn up for all claims

| Place of search | Date of completion of the search | Examiner |
|---|---|---|
| Berlin | 9 June 2006 | Feng, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 42 5037

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2006

| Patent document cited in search report | | Publication date | Patent family member(s) | | Publication date |
|---|---|---|---|---|---|
| US 6233276 | B1 | 15-05-2001 | AU | 7477700 A | 17-04-2001 |
| | | | DE | 10083117 T0 | 04-10-2001 |
| | | | GB | 2359711 A | 29-08-2001 |
| | | | TW | 486862 B | 11-05-2002 |
| | | | WO | 0120780 A1 | 22-03-2001 |
| US 2004171366 | A1 | 02-09-2004 | NONE | | |

EPO FORM P0459

For more details about this annex : see Official Journal of the European Patent Office, No. 12/82

## REFERENCES CITED IN THE DESCRIPTION

### Patent documents cited in the description

- EP 0933903 B
- WO 03047196 A
- US 20040171366 A

### Non-patent literature cited in the description

- **J.J. VAN DE BEEK et al.** On channel estimation in OFDM systems. *Proceedings IEEE, Vehicular Technology Conference,* July 1995, vol. 2
- **O. EDFORS et al.** OFDM channel estimation by singular value decomposition. *IEEE Transactions on Communications,* July 1998, 931-939